# EUROPEAN PATENT APPLICATION

(11) **EP 1 870 293 A1**
(43) Date of publication of application: **26.12.2007**
(21) Application number: 06115667.5
(22) Date of filing: 19.06.2006
(51) Int. Cl.: B60R 21/015

(54) **Capacitive occupant classification system operating method**

(71) Applicant: IEE INTERNATIONAL ELECTRONICS & ENGINEERING S.A., 6468 Echternach (LU)
(72) Inventor: Hirsche, Torsten, 54317 Osburg (DE); Gales, Marc, 57940 Volstroff (FR); Wendt, Christoph, 54292 Trier (DE); Schleeh, Thomas, 54338 Schweich (DE); Scheckenbach, Ingrid, 54668 Ferschweiler (DE)
(74) Representative: Beissel, Jean

(57) **Abstract**

The method concerns operating a capacitive occupant classification system that comprises a sensing electrode and a shielding electrode arranged in a vehicle seat. The method comprises a measurement routine for classifying an occupancy state of the vehicle seat and a system check routine. In particular, the system check routine includes applying a first DC voltage difference between the sensing electrode and the shielding electrode and determining a leakage current caused by this first voltage difference between the sensing and shielding electrodes. Applying of the first voltage difference is terminated as soon as the testing indicates that the determined leakage current is not comprised in the predefined range of acceptable values, e.g. if the leakage current exceeds a certain reference value that indicates the highest tolerable leakage current.

## Description

### Technical field

The present invention generally relates to a method for operating a capacitive occupant classification system, more specifically to such a method including a system check routine.

### Background Art

A capacitive seat occupancy classification system and method are proposed in EP 1 457 391 A1. The system comprises first and second capacitive electrode arrangements in a vehicle compartment. The first capacitive electrode arrangement is located in a seat of the vehicle and includes a sensing electrode and a shielding electrode. The sensing electrode is directed towards the occupant of the seat, whereas the shielding electrode is directed towards the seat frame. An insulating layer separates the sensing from the shielding electrode. The system can operate in a so-called loading mode, in which the sensing electrode and the shielding electrode are driven by the same AC voltage, so that the shielding electrode prevents the electric field of the sensing electrode from coupling with the seat frame. This dramatically increases the sensitivity of the sensing electrode in direction of the occupant. Such an electrode configuration is also known from US 5,166,679.

For safety-critical applications such as occupant classification, efforts are always made in order to make the system as reliable as possible. Methods for operating such systems therefore include regularly checking different system parameters in order to detection potential failures. For instance, it is known that a wet seat may affect the measurements of capacitive sensing systems. EP 1 457 391 A1 therefore suggested measuring the electrical resistance between the sensing electrode and the shielding electrode to test whether the insulation layer between the electrodes is dry.

If the seat is wet, applying a DC voltage difference between two conductors such as the electrodes of the electrode arrangement may cause corrosion of the anode due to oxidation, which would affect the lifetime of the entire system.

### Technical problem

It is an object of the present invention to provide an improved method for operating a capacitive occupant classification system. This object is achieved by a method as claimed in claim 1.

### General Description of the Invention

The method concerns operating a capacitive occupant classification system that comprises a sensing electrode and a shielding electrode arranged in a vehicle seat. The method comprises a measurement routine for classifying an occupancy state of the vehicle seat and a system check routine. In particular, the system check routine includes applying a first DC voltage difference between the sensing electrode and the shielding electrode and determining a leakage current caused by this first voltage difference between the sensing and shielding electrodes. According to an important aspect of the invention, applying of the first voltage difference is terminated as soon as the testing indicates that the determined leakage current is not comprised in the predefined range of acceptable values, e.g. if the determined leakage current exceeds a certain reference value that corresponds to the highest tolerable leakage current. As will be appreciated, the time during which electrolytic conduction occurs between the two electrodes is thus reduced to a minimum.

According to a preferred embodiment of the method, the first voltage difference is gradually increased. Of course, while the first voltage difference is increased, the leakage current is determined in order to stop applying the voltage difference as soon as the determined leakage current is not comprised any more in the predefined range of acceptable values. This helps to further reduce corrosion of the electrodes.

According to yet another preferred embodiment of the method, the system check routine includes scheduling a next execution of the system check routine after a certain waiting time, the waiting time being determined depending on whether the determined leakage current is comprised in the predefined range of acceptable values or not. The method for operating a capacitive occupant classification system is normally executed repeatedly to make sure that a possible change of the occupation state of the seat is detected. As long as no failure is detected, the method is repeated e.g. every second. If however it is determined that there is a failure, namely an unacceptably high leakage current, the method is repeated less often. As one of the reasons for high leakage current is the seat being wet, reducing the repetition rate of the system check routine and thus of the applying of a DC voltage difference, results in less corrosion. In a preferred variant of the method, the waiting time is determined based on both the determined leakage current and the first voltage difference. For instance, a high leakage current at a low first voltage difference may be due to the seat being very wet. In this case, it is preferable to wait a longer time, e.g. from a few tens of minutes to hours, because drying of the seat is not a matter of seconds but rather of minutes or even hours. Preferably, the waiting time is comprised in a range from 0.1 s to 2 s if the determined leakage current is comprised in the predefined range of acceptable values and in a range from 5 s to 60 minutes, more preferably between 10 s and 20 minutes, if the determined leakage current is not comprised in the predefined range of acceptable values.

If the sensing electrode and the shielding electrode are electrically connected through a diode to form a series circuit, the first voltage difference is applied in reverse direction of the diode, i.e. so that the diode essentially blocks the current that would result from the voltage difference. If the shielding electrode and the sensing electrode are connected this way, the system check routine may include applying a second DC voltage difference in forward direction of the diode, i.e. so that the current is not blocked, and determining a current flowing through the series circuit in response to the second voltage difference for determining whether the series circuit is interrupted. If no or only little current flows in response to the applying of the second voltage difference, it can be concluded that the said series circuit is interrupted somewhere. In this case, the system may switch into a failure mode and signalise the failure to the driver. Any capacitance measurement made in this case cannot be relied upon, so that such a measurement is preferably omitted in case of circuit interruption. The first voltage difference may be applied during at least one first time interval, wherein the second voltage difference may be applied during at least one second time interval. Tests have shown that it is advantageous to adjust the first and second voltage differences, as well as the time interval durations in such a way that an integral of the first voltage difference over the at least one first time interval is substantially additively inverse to an integral of the second voltage difference over the at least one second time interval. It should be noted that the time intervals can be generalised time intervals, i.e. time intervals comprising more than one continuous portion. In this case, the first and second time intervals may be interlaced.

Alternatively to applying a second voltage difference and measuring the resulting current, one may feed, by means of a current source, a predefined current through the series circuit in forward direction of the diode and determine the corresponding second voltage difference between the sensing electrode and the shielding electrode, i.e. the voltage difference that the current source has to build up to cause the flow of the predefined current, for deciding whether the series circuit is interrupted. In this case, the first voltage difference is applied during at least one first time interval and the current is fed through the series circuit in forward direction of the diode during at least one second time interval in such a way that the integral of the first voltage difference over the at least one first time interval is substantially additively inverse to the integral of the second voltage difference over the at least one second time interval.

For sake of completeness, it should be mentioned that the measurement routine preferably includes driving the sensing electrode and the shielding electrode with an oscillating voltage, i.e. applying to both electrodes the same oscillating voltage, and determining capacitive coupling between the sensing electrode and an object or occupant placed on the vehicle seat, e.g. by measuring a loading current drawn by said sensing electrode. Most preferably, the measurement routine is executed only if the determined leakage current is comprised in the range of acceptable values.

### Brief Description of the Drawings

Further details and advantages of the present invention will be apparent from the following detailed description of not limiting embodiments with reference to the attached drawings, wherein:
Fig. 1 is an exploded perspective view of an electrode arrangement of a capacitive occupancy classification system;
Fig. 2 is a schematic top view of a vehicle seat equipped with the electrode arrangement of Fig. 1;
Fig. 3 is a flow chart of a first procedure for operating a capacitive occupancy classification system;
Fig. 4 is a schematic representation of the voltages applied during the procedure illustrated in Fig. 3;
Fig. 5 is a flow chart of a second procedure for operating a capacitive occupancy classification system;
Fig. 6 is a flow chart of a third procedure for operating a capacitive occupancy classification system;
Fig. 7 is a vertical cross sectional view of an electrode arrangement provided with local test regions of a first configuration;
Fig. 8 is a vertical cross sectional view of an electrode arrangement provided with local test regions of a second configuration;
Fig. 9 is a vertical cross sectional view of an electrode arrangement provided with local test regions of a third configuration;
Fig. 10 is a vertical cross sectional view of an electrode arrangement provided with local test regions of a fourth configuration;
Fig. 11 is a flow chart of a variant of the procedure of Fig. 3.

### Description of Preferred Embodiments

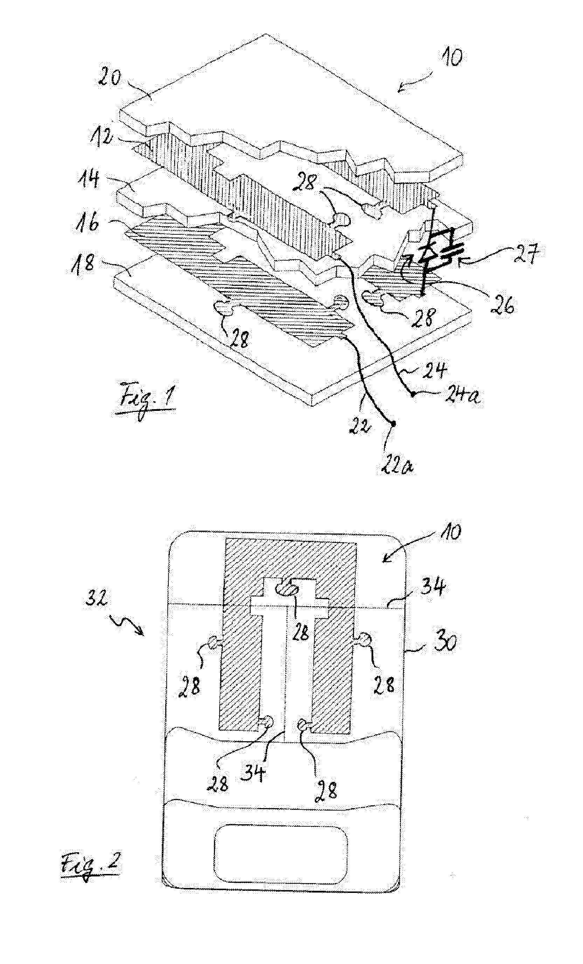

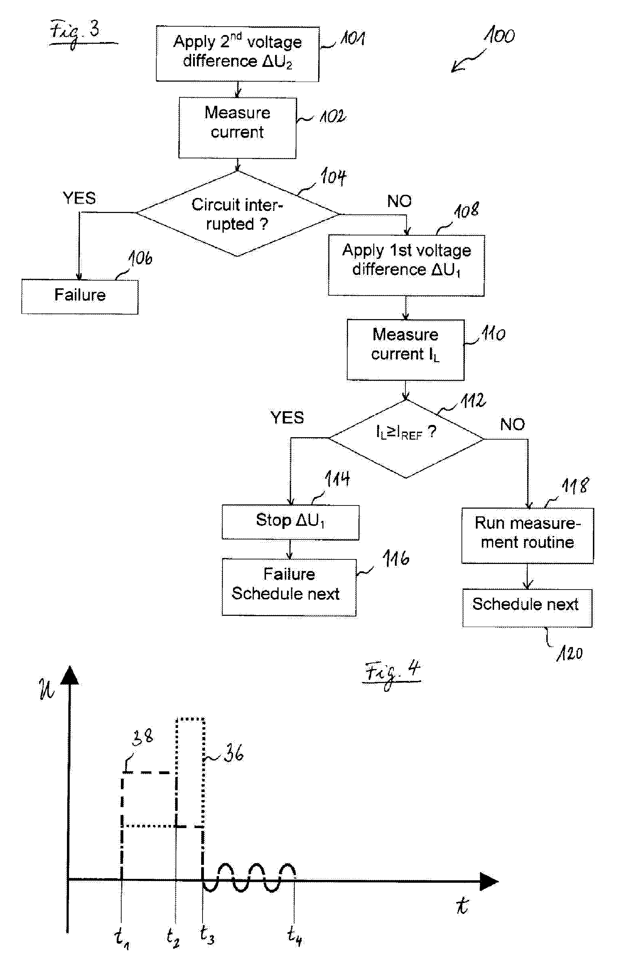

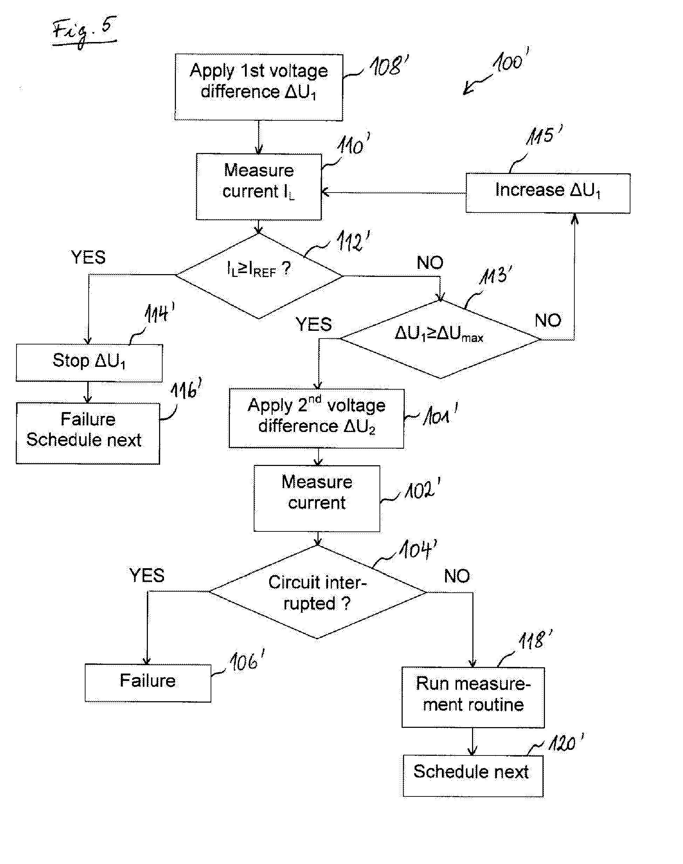

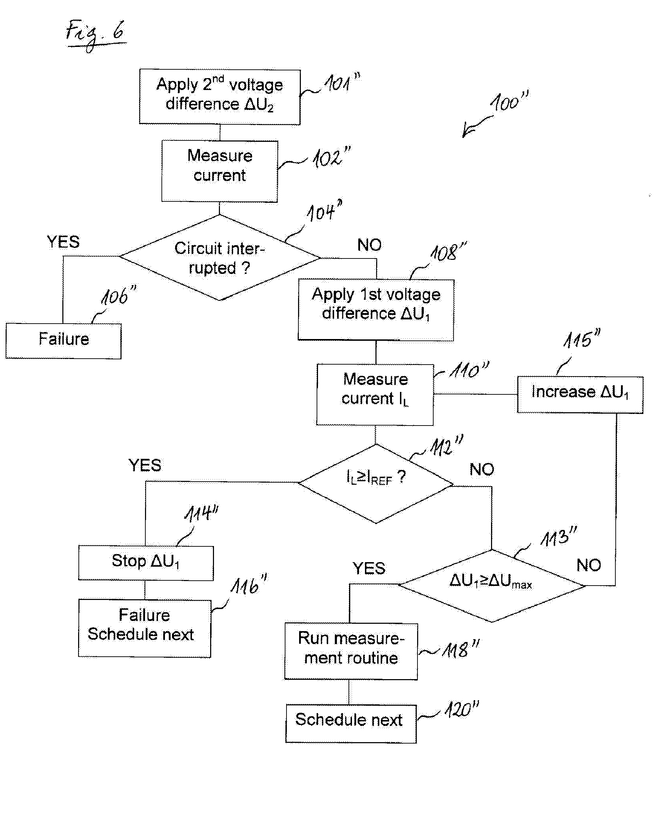

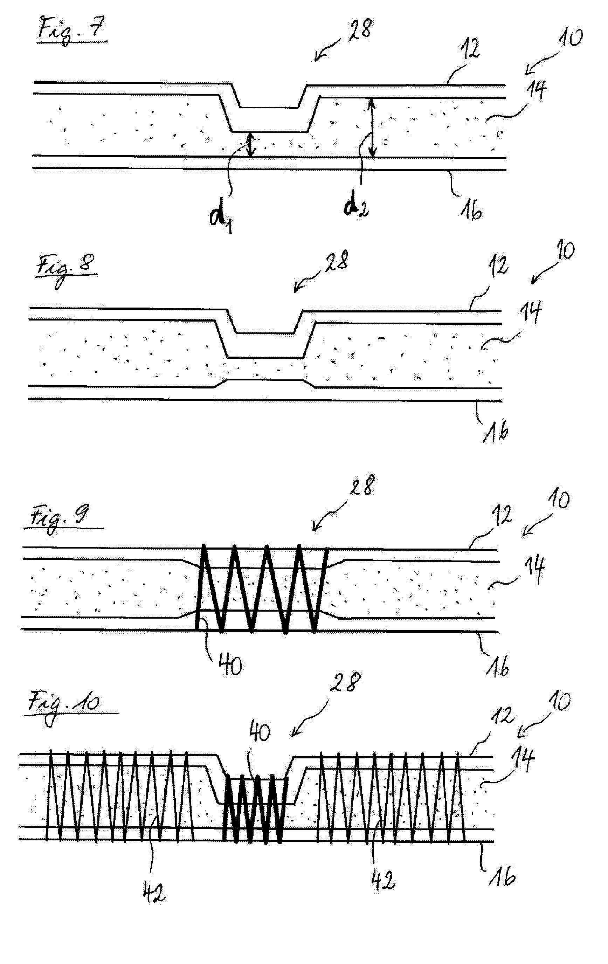

An electrode arrangement 10 of a capacitive occupant classification system is shown in Figs. 1 and 2. The electrode arrangement 10 is a sandwich structure that comprises a generally planar sensing electrode 12, a shielding electrode 16 and an insulating layer 14 sandwiched by the sensing electrode 12 and the shielding electrode 16. The electrodes 12, 16 can be textile or film-based electrodes; the insulating layer 14 is preferably a textile, such as a knitted, woven or non-woven fabric. Preferably, the insulating layer 14 comprises a 3D spacer fabric. When the electrode arrangement 10 is operationally integrated into the seating portion 30 of a vehicle seat 32, the electrodes 12, 16 are substantially parallel to the upper surface of the seating portion 30, with the sensing electrode being closer to that upper surface than the shielding electrode 16. The electrodes 12, 16 are shown generally U-shaped. It should be noted, however, that other shapes are possible and, in some cases even desirable. The shape of the electrodes 12, 16 can be adjusted depending on the seat design, namely the geometry of seam lines 34 and crimp channels along which the seat cover is attached to the cushion. To further enhance the haptic properties of the electrode arrangement 10, it may be arranged in a felt pocket or, as shown, between two outer fabric layers 18, 20. The electrode arrangement 10 may further be protected by a moisture barrier layer. This may be arranged above the sensing electrode 12, e.g. above the fabric layer 20 or between the latter and the sensing electrode 12. Alternatively, the fabric layer 20 can comprise or be made of moisture resistant material and serve itself as a moisture barrier layer.

For occupancy detection the system executes a measurement routine, in which a control circuit (not shown), such as an application-specific integrated circuit (ASIC), applies a sinusoidal oscillating signal to the shielding electrode 16, while it keeps the sensing electrode 12 essentially at the same potential as the shielding electrode 16. lf the capacitance between the sensing electrode 12 and chassis ground changes, e.g. because of a passenger on the seat 32, the loading current drawn by the sensing electrode 12 changes. The control circuit measures the current drawn by the sensing electrode 12, which allows detecting and classifying an occupant on the seat 32. As the shielding electrode 16 is driven with the same voltage as the sensing electrode 12, the sensing electrode 12 is only sensitive into the direction facing away from the shielding electrode 16, i.e. in direction of the upper surface of seat portion 30. Thus, the capacitive occupant classification system can determine if the seat 32 is vacant, equipped with a child seat or occupied by a passenger.

The sensing electrode 12 and the shielding electrode 16 can be connected to the control circuit by electric lines 22, 24. Although these are represented in Fig. 1 as separate lines, it is preferable that they are both integrated in single coaxial cable. In this case, the electric line 24 corresponds to the core conductor of the coaxial cable while the electric line 22 corresponds to the conductive sheath of the coaxial cable. Terminals 22a and 24a of the electric lines 22, 24 are connected to the control circuit of capacitive occupancy classification system.

It is also shown in Fig. 1 that a diode 26 and a capacitor 27 are arranged in parallel between the shielding electrode 16 and the sensing electrode 12. The forward direction of the diode 26 is from shielding electrode 16 to sensing electrode 12. During the measurement routine, the diode 26 is substantially passive, as the electrodes 12, 16 are driven with the same voltage. The capacitor 27 serves to reduce electromagnetic interference (EMI).

The accuracy of the occupancy state determined in the measurement routine obviously depends on whether the system is operating properly. The system therefore should be able to determine failures, caused e.g. by an interrupted circuit, a short-circuit or seat wetness. As it has been said before, a wet seat condition may affect occupant classification. Specifically, if the seat 32 is unoccupied but wet, the loading current drawn by the sensing electrode may be as large as if an adult were seated on the seat 32. A system check routine is therefore regularly run, which detects system failures.

Figs. 3 and 4 illustrate a basic embodiment of a method or procedure 100 for operating an occupancy classification system. In a first time (Step 101 in Fig. 3), e.g. after the driver has turned the ignition key, a DC voltage difference U₂ is applied between the terminals 22a and 24a of the electric lines 22, 24 in forward direction of the diode 26, i.e. the terminal 24a (and thus the shielding electrode 16) is brought to a higher electric potential than the terminal 22a (and thus the sensing electrode 12). If the electric circuit of the electric line 22, the shielding electrode 16, the diode 26, the sensing electrode 12 and the electric line 24 is not interrupted in some place, the control circuit can determine, at 102, that a current flows between the terminals 22a and 24a. If, at decision step 104, despite of the voltage difference U₂, no or too small a current flows between the terminals 22a, 24a, the system goes into a failure mode (step 106) in which all measurements are suspended. The driver may be informed of the failure by a warning signal, e.g. a warning light.

If, however, the system has passed the first test 104, another DC voltage difference U₁ is applied, at step 108, between the terminals 22a and 24a, this time in reverse direction of the diode 26, i.e. the terminal 22a (and thus the sensing electrode 12) is brought to a higher electric potential than the terminal 24a (and thus the shielding electrode 16). Again, the current flowing between the sensing electrode 12 and the shielding electrode 16 is measured (step 110). Under ideal conditions, i.e. assuming an ideal diode 26 and otherwise perfect insulation between the sensing electrode 12 and the shielding electrode 16, no current would be measured. Under real conditions, some current, so called leakage current I_{L}, may flow in reverse direction through the diode and along current paths, due to imperfect insulation, between the sensing and shielding electrodes. Normally, the leakage current I_{L} caused by the voltage difference U₁ is small, i.e. below a certain reference value. If, at decision step 112, it is determined that the leakage current I_{L} exceeds the reference value I_{REF}, the insulation between the sensing electrode 12 and the shielding electrode 16 is deemed deteriorated. This can be due to a failure of the insulation layer 14, e.g. as a consequence of stress, or to the seat 32 being moist. Naturally, if the insulation of the sensing electrode 12 is deteriorated, the capacitance measurement cannot be relied upon any more. Thus if too high a leakage current I_{L} is measured, it is best not to carry out the capacitance measurement of step 118. If the leakage current I_{L} is below the reference value I_{REF}, occupant detection is carried out as explained above by running the measurement routine 118. The procedure 100 is executed periodically, e.g. every 1 s (set in step 120) to detect possible changes of the occupancy etc.

If, for one reason or another, the seat 32 is wet, the leakage current I_{L} between the sensing electrode 12 and the shielding electrode 16 is due to electrolytic conduction. As long as the voltage difference U₁ is applied, the sensing electrode 12 acts as anode, the shielding electrode 16 as cathode. A drawback of this testing method is that the anode gradually corrodes, which affects the lifetime of the entire system. In the proposed method, applying the voltage difference U₁ in reverse direction of the diode 26 is therefore terminated (step 114) as soon as a leakage current I_{L} exceeding the reference value I_{REF} is determined, in order to minimise the effect of the electrolysis on the electrodes 12, 16. In this case, the system switches into failure mode (step 116), which is also indicated to the driver by a warning signal. The system then schedules (step 116) a new execution of the system check routine, where the waiting time between the last and the next execution of the system check routine is set to a much higher value than the duration of a cycle. Preferably, the waiting time is set to at least 10 s. Waiting times in the range from 1 to 10 minutes are still more preferable, because drying of a vehicle seat 32 normally takes considerable time.

Fig. 11 illustrates a variant of the procedure of Fig. 3, from which the variant differs in that the steps 101 and 102 have been replaced by steps 101 a and 102a. In step 101 a, a current source is connected between the terminals 22a and 24a and feeds a predefined DC current through connection line 22, the shielding electrode 16, the diode 26, the sensing electrode 12 and the connection line 24, in forward direction of the diode. To establish this current, the current source behaves so as to apply a second voltage difference U₂ between the terminals 22a and 24a of the electric lines 22, 24, which can be measured. N case of an interruption of the circuit or a bad contact, the voltage difference U₂ necessary for establishing the predefined current is high in comparison to the normal situation. This allows then to decide in step 104 whether the circuit is deemed interrupted or working properly.

Fig. 4 shows the voltages on the electrodes 12, 16 during a complete cycle of the system operation procedure 100, during which no failure was detected. The dotted line 36 shows the voltage applied to the sensing electrode 12, the dashed line 38 the voltage applied to the shielding electrode 16 as a function of time t. Zero voltage corresponds to chassis ground. It has proven to be advantageous if the mean voltage difference over an entire cycle of the procedure 100 is zero. This translates graphically in that the areas under the dashed curve 38 and the dotted curve 36 are equal. In a first time interval from time t₁ to time t₂, U₂ is applied (or the corresponding current fed to the circuit), i.e. the shielding electrode 16 is set at a higher potential than the sensing electrode 12. In a second time interval, from t₂ to t₃, U₁ is applied, i.e. the sensing electrode 12 is set at a higher potential than the shielding electrode 16. Although the voltage differences U₁ and U₂ are represented as being constant in Fig. 4, those skilled will note that these voltage differences may also be implemented variable in time. According to a preferred embodiment, the second voltage difference U₂ is applied (or the corresponding current is fed to the circuit) for about 24 ms and the first voltage difference U₁ for about 20 ms (unless applying the first voltage difference is stopped in response to too high a leakage current I_{L}). In a third time interval, from t₃ to t₄, the capacitance measurement is carried out. During the third time interval (typical duration: 50 ms), the voltage applied to sensing electrode 12 and shielding electrode 16 is the same in amplitude and phase.

Those skilled will note that the voltage difference U₂, which is in forward direction of the diode 26, depends on the current-voltage characteristic of the diode 26. For instance, the voltage drop across a normal silicon diode conducting diode is approximately 0.6 to 0.7 V. The voltage drop may be different for other diode types.

Fig. 5 shows a flow chart illustrating another embodiment of a procedure 100' for operating a capacitive occupant classification system. The occupant classification system first runs a system check routine to determine a potential failure of the system. To determine the leakage current I_{L}, a first voltage difference U₁ is applied (step 108') between the terminals 22a and 24a in reverse direction of the diode 26 by applying a higher potential to terminal 22a than to terminal 24a. The resulting leakage current I_{L} is measured (step 110') and it is tested (step 112') whether it lies below or above the reference value I_{REF}.

If this is the case, the first voltage difference U₁ is gradually increased up to a preset maximum value (steps 113' and 115'), while the resulting leakage current is monitored (step 112'). It may be noted that the reference value I_{REF} the leakage current is compared to can be depending on the currently applied first voltage difference U₁. In step 113', it is tested whether the preset maximum value Uₘₐₓ of the first voltage difference U₁ has been reached. If this is the case and the leakage current I_{L} has remained below the reference value I_{REF}, a second voltage difference U₂ is applied between the sensing electrode 12 and the shielding electrode 16 to test for a possible interruption of the circuit (step 101'). The second voltage difference U₂ is applied in forward direction of the diode 26. The current that flows through the series circuit of the electric line 22, the shielding electrode 16, the diode 26, the sensing electrode 12 and the electric wire 24 is tested at step 102'. If no or only a small current flows through the circuit, it is concluded (at decision step 104') that the circuit is interrupted and the system switches into a failure mode (step 106'). A warning signal is issued that informs the driver that the occupant classification system is not operational and needs servicing. In the opposite case, the measurement routine is carried out (step 118') and the occupancy state of the vehicle seat is determined. A next execution of the procedure 100' is scheduled after a short waiting time (step 120').

If at decision step 112', it has been found that the leakage current I_{L} between the electrodes 12, 16 is too high, applying the first voltage difference is immediately stopped (step 114') and a next execution of the procedure 100' is scheduled (step 116') after a waiting time that is longer than the waiting time set in step 120'. The waiting time until the next execution of the procedure 100' may be computed as a function of the measured leakage current I_{L} and the first voltage difference U₁ applied between the electrodes 12, 16. If, for example, a relatively high leakage current I_{L} has been measured at a low applied voltage difference U₁, this may indicate that the seat 32 is very wet. As a consequence, the waiting time could be increased to give the seat 32 more time to dry. If, on the contrary, the too high leakage current I_{L} has only been measured at a higher applied voltage difference U₁, this may indicate that the seat 32 is only slightly wet. In this case the waiting time may be set a lower value than in the first case.

Fig. 6 shows a flow chart of yet another procedure 100" for operating the occupancy classification system. The main difference with respect to the previous embodiment is that testing for circuit interruption is performed before testing for leakage current. Only if the system passes the circuit interruption test, the leakage current I_{L} is measured. More specifically, the second voltage difference U₂ (in forward direction of the diode 26) is applied in step 101". The current flowing in response to that is measured at 102". If the circuit is interrupted (decision step 104"), the system switches into failure mode (step 106") and indicates a failure to the driver. In the other case, a first voltage difference U₁ is applied (step 108") between the electrodes 12, 16 (in reverse direction of the diode 26). The resulting leakage current I_{L} is measured (step 110") and compared to the reference value I_{REF}. The first voltage difference U₁ is increased while the leakage current is monitored (steps 112", 113" and 115"). If the leakage current I_{L} at some moment exceeds the reference value I_{REF}, application of the voltage difference is immediately stopped (step 114") and the system switches to a failure mode (step 116"). This is indicated to the driver and a next execution of the system check routine is scheduled. The first voltage difference U₁ is only increased up to a predefined maximum value Uₘₐₓ. If the leakage current I_{L} remains below the reference value I_{REF} even with the first voltage difference U₁ at maximum ( U₁≥ Uₘₐₓ), the measurement routine is run (step 118"), wherein the occupancy state of the seat is determined. The waiting time scheduled in this case (in step 120") corresponds to the repetition rate under proper operating conditions.

With regard to the procedures illustrated in Figs. 5 and 6, it should be mentioned that steps 101' and 102' respectively 101" and 102" can be replaced with steps 101 a and 102a as discussed above with reference to Fig. 11. Adapting the tests 104' and 104" accordingly is deemed within the reach of those skilled in the art.

As can be seen in Figs. 1 and 2, the electrode arrangement 10 is provided with a plurality of local test regions 28 in which electrolytic conduction between the sensing electrode 12 and the shielding electrode 16 is enhanced with respect to outside the test regions 28 if the seat is wet. In absence of such test regions 28, electrolysis would occur in random locations of the electrode arrangement 10 during the measurement of the leakage current I_{L}. If however, as in the present electrode arrangement 10, one provides for conditions favourable to electrolytic conduction in certain local regions 28 (as opposed to the electrode arrangement 10 as a whole), the leakage current between the electrodes 12, 16 will pass in these regions 28. The anode may still corrode, but instead of this happening at random spots, this now happens at defined locations. The local test regions 28 are distributed over the electrode arrangement 10 so as to be associated with different portions of the seating portion 30 when the electrode arrangement 10 is integrated therein. An arrangement with a plurality of test regions 28 is preferred over one with only one local test region 28, as wetness does not always occur homogeneously over the entire seating portion 32. In Fig. 2, it is also shown that the local test regions may be formed as lobes or appendices projecting laterally, i.e. in the plane of the electrode arrangement, from the body portion of the electrode arrangement 10.

Figs. 7 to 10 show different configurations of local test regions 28 in which electrolytic conduction between the sensing electrode 12 and the shielding electrode 16 is enhanced. As shown in Figs. 7 and 8, a local test region 28 may be a region of the electrode arrangement 10, where the distance between the sensing electrode 12 and the shielding electrode 16 is reduced with respect to outside the test region 28. When there is a voltage difference between the sensing electrode 12 and the shielding electrode 16, the resulting electric field will have higher field strength inside the local test region 28 than outside the local test region 28. This can easily be deduced from the relation E= U/d, where E is the electric field strength, U is the potential difference between the electrodes 12, 16 and d is the distance between the electrodes 12, 16. With E₁ being the electric field strength in the test region 28, E₂ the electric field strength outside the test region 28, one obtains E₁= U/d₁ >> E₂= U/d₂, if d_{1<<}d₂, where d₁ is the distance between the electrodes 12, 16 in the test region 28, d₂ the distance between the electrodes 12, 16 outside the test region 28. At least at the beginning of an electrolysis, electrolytic conduction in the test region 28 can be expressed as I_{EL}= . U/d₁, where is a proportionality constant depending on the solved ions and the area of the test region 28 and I_{EL} is the electric current due to the ions travelling between the electrodes 12, 16. This shows that the electric current density between the electrodes 12, 16 inside the local test regions 28 is increased with respect to outside these regions.

The figures show that the thickness of the electrodes 12, 16 may be larger in the test regions 28 than outside the test regions. As corrosion occurs mostly in the test regions, providing the electrodes 12, 16 with more material in these regions increases the lifetime of the system. In Fig. 7, only the sensing electrode 12 is shown having an increased material thickness. Such a configuration would be suitable if during measurement of the leakage current I_{L}, the sensing electrode 12 is the anode, which corrodes. It should be noted that a configuration wherein only the shielding electrode 16 has an increased thickness would also be possible. In this case, the latter should be used as the anode during the measurement of the leakage current. In the embodiment of Fig. 8, both the sensing electrode 12 and the shielding electrode 16 have the extra thickness in the test region 28.

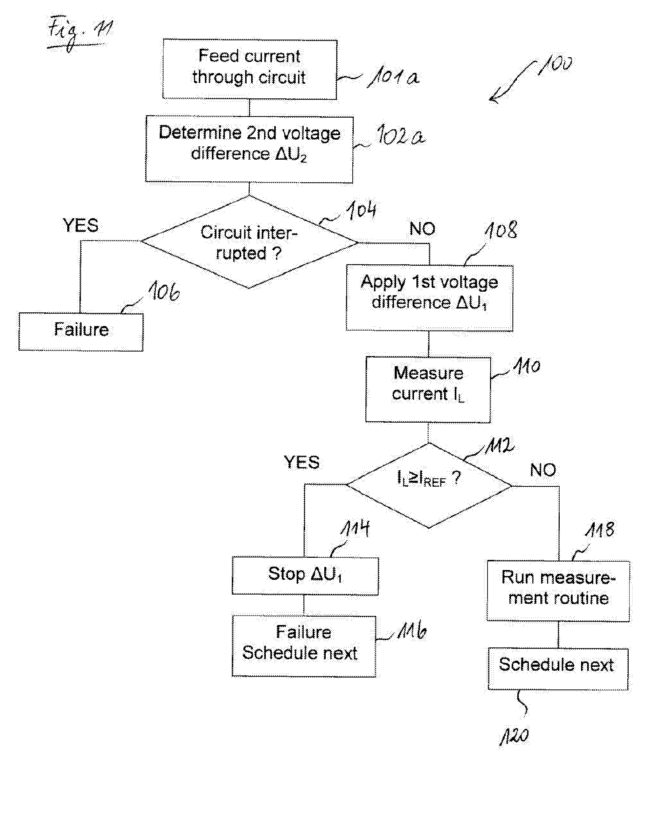

Figs. 9 and 10 show another configuration of a local test region 28. Only in these local test regions 28, a hydrophilic thread 40 extends between the sensing electrode 12 and the shielding electrode 16. Outside the local test region 28, the hydrophilic thread 40 is absent. If the seat 32 is humid or wet, the hydrophilic thread 40 will draw water and thereby in favour the formation of a continuous water column between the electrodes 12, 16. As a result, electrolytic conduction in the test region 28 is enhanced with respect to outside the test region. It should be noted that a hydrophilic thread 40 can be used as an alternative or in addition to reduced distance between the electrodes 12, 16. As in the previous configurations, additional material thickness of the electrodes (or one of the electrodes) inside the local test region 28 is advantageous for increasing the system lifetime. Fig. 10 shows an embodiment of a local test region in which both reduced distance between the electrodes 12, 16 and a hydrophilic thread 40 are used for enhancing electrolytic conduction. Outside the local test region, hydrophobic thread 42 is used to sew together the electrode assembly 10.

One should remember that once a significant leakage current I_{L} has been detected, applying the voltage difference U₁ in reverse direction of the diode 26 is stopped. In the present electrode arrangement the predominant part of the current due to electrolytic conduction is concentrated in the local test regions 28. Damage caused by the electrolysis to the electrodes therefore occurs mainly in the test regions and, if at all, to a much smaller extent outside the test regions. Furthermore, as electrolytic conduction is enhanced, a leakage current may be detected earlier (i.e. at a lower voltage difference U₁) than in a conventional electrode arrangement for a capacitive occupancy detection system.

Those skilled will appreciate that the method for operating the capacitive sensing system disclosed herein can be used for a conventional system, i.e. one without local test regions. For the reasons discussed above, a capacitive sensing system, wherein the electrode arrangement is provided with local test regions is, however, preferred.

## Claims

1. A method for operating a capacitive occupant classification system, said occupant classification system comprising a sensing electrode and a shielding electrode arranged in a vehicle seat, said method comprising a measurement routine for classifying an occupancy state of said vehicle seat and a system check routine, wherein said system check routine includes:
applying a first voltage difference between said sensing electrode and
said shielding electrode, and
determining a leakage current caused by said first voltage difference between said sensing electrode and said shielding electrode,
testing whether said determined leakage current is comprised in a
predefined range of acceptable values,
said method being **characterized in that**
said applying of said first voltage difference is terminated as soon as said testing indicates that said determined leakage current is not comprised in said predefined range of acceptable values.

2. The method according to claim 1, wherein said applying of said first voltage difference includes gradually increasing said first voltage difference.

3. The method according to claim 1 or 2, wherein said system check routine includes scheduling a next execution of the system check routine after a certain waiting time and wherein said waiting time is determined depending on whether said determined leakage current is comprised in said predefined range of acceptable values.

4. The method according to claim 3, wherein said waiting time is determined depending on said determined leakage current and said first voltage difference.

5. The method according to claim 3 or 4, wherein said waiting time is comprised in a range from 0.1 s to 2 s if said determined leakage current is comprised in said predefined range of acceptable values and in a range from 5 s to 10 minutes if said determined leakage current is not comprised in said predefined range of acceptable values.

6. The method according to any one of claims 1 to 5, wherein said sensing electrode and said shielding electrode are electrically connected through a diode to form a series circuit, and wherein said first voltage difference is applied in reverse direction of said diode.

7. The method according to claim 6, wherein said system check routine comprises applying a second voltage difference in forward direction of said diode and determining a current flowing through said series circuit in response to said second voltage difference for determining whether said series circuit is interrupted.

8. The method according to claim 7, wherein said first voltage difference is applied during at least one first time interval, wherein said second voltage difference is applied during at least one second time interval and wherein an integral of said first voltage difference over said at least one first time interval is substantially additively inverse to an integral of said second voltage difference over said at least one second time interval.

9. The method according to claim 6, wherein said system check routine comprises feeding a current through said series circuit in forward direction of said diode and determining a second voltage difference between said sensing electrode and said shielding electrode for deciding whether said series circuit is interrupted.

10. The method according to claim 9, wherein said first voltage difference is applied during at least one first time interval, wherein said current is fed through said series circuit in forward direction of said diode during at least one second time interval and wherein an integral of said first voltage difference over said at least one first time interval is substantially additively inverse to an integral of said second voltage difference over said at least one second time interval.

11. The method according to any one of claims 1 to 10, wherein said measurement routine includes:
driving said sensing electrode and said shielding electrode with an oscillating voltage,
determining capacitive coupling between said sensing electrode and
an object or occupant placed on said vehicle seat.

12. The method according to any one of claims 1 to 11 wherein said measurement routine is executed only if said determined leakage current is comprised in said range of acceptable values.
